# EUROPÄISCHE PATENTSCHRIFT

(11) **EP 1 614 524 B1**
(45) Veröffentlichungstag und Bekanntmachung des Hinweises auf die Patenterteilung: **30.08.2006**
(21) Anmeldenummer: 05005296.8
(22) Anmeldetag: 10.03.2005
(51) Int. Cl.: B29C 49/34, B29C 49/04

(54) **Hohlkörperblasanlage**
Blow moulding apparatus
Appareil de soufflage

(30) Priorität: 08.07.2004 DE 102004033131
(43) Veröffentlichungstag der Anmeldung: 11.01.2006
(73) Patentinhaber: Thermo- Technik-Systeme GmbH, 29394 Lüder/Reinstorf (DE)
(72) Erfinder: Koetke, Claus-Dieter, 29389 Bad Bodenteich (DE)
(74) Vertreter: Prietsch, Reiner

(56) Entgegenhaltungen:
- EP-A- 0 185 110
- EP-A- 0 256 442
- EP-A- 1 110 698
- US-A- 5 403 175
- PATENT ABSTRACTS OF JAPAN Bd. 1996, Nr. 06, 28. Juni 1996 (1996-06-28) & JP 08 034072 A (INOAC CORP), 6. Februar 1996 (1996-02-06)

## Beschreibung

Im Stand der Technik sind einerseits Hohlkörperblasanlagen mit vertikaler Formtrennebene und andererseits Anlagen mit horizontaler Formtrennebene bekannt.

Die Erfindung betrifft eine Hohlkörperblasanlage der letzteren Gattung, eine sog. Vertikalanlage, bestehend aus einem Maschinengestell mit einer Schlauchextrusionseinrichtung, unterhalb deren Düse sich mindestens eine Schließeinheit mit einer ersten und einer zweiten vertikalen Schließplatte befindet, die gegensinnig aufeinander zu und voneinander weg verfahrbar auf horizontalen Holmen geführt sind. Die Holme können ihrerseits an einem Schlitten montiert sein, mittels dessen die Schließeinheit rechtwinklig zur Bewegungsrichtung der vertikalen Schließplatten aus einer Position unter der Schlauchextrusionsdüse in eine Position unter einer Blaspinole verfahrbar ist.

Derartige Hohlkörperblasanlagen mit an den Schließplatten befestigten Formhälften und vertikaler Formtrennebene, dienen insbesondere zur Herstellung von Kunststoffflaschen und technischen Formteilen, auch solchen, die langgestreckt und beidseitig offen sind wie beispielsweise Luftführungskanäle sind aus der EP 0185110 bekannt.. Abhängig von der Art der Kunststoffe, dem Durchmesser, der Wandstärke und anderen Parametern ist die Länge der mit derartigen Anlagen herstellbaren Teile jedoch durch das mit wachsender Länge zunehmende Gewicht des extrudierten Schlauches begrenzt. Vor allem eignen sich aber solche An-lagen nicht zur Herstellung von nahtlosen, langgestreckten Rohren, Kanälen und ähnlichen Hohlkörpern, deren Längsachse starke und/oder mehrfache Bögen beschreibt.

Für solche Teile sind deshalb Hohlkörperblasanlagen bekannt, bei denen die Formtrennebene nicht vertikal sondern horizontal ist. Z.B. zeigt die US 5 030 083 eine Anlage mit einer Schlauchextrusionseinrichtung, der ein Roboter zugeordnet ist, der den hängend extrudierten Schlauch von der Düse übernimmt und in die Kavität einer unteren, liegend angeordneten Blasformhälfte einlegt, die auf einer unteren Schließplatte sitzt und mit dieser anschließend horizontal in eine Schließeinheit verfahren wird, wo die Form durch Absenken einer die obere Blasformhälfte tragenden, horizontalen Schließplatte geschlossen wird. Mit einem die untere Schließplatte tragenden Schlitten ist ein zweiter Schlitten verbunden, der eine weitere, untere Schließplatte und darauf eine zweite untere Formhälfte trägt, die im Tandem mit der ersten, unteren Formhälfte verfahren wird und der eine zweite Schließeinheit zugeordnet ist. Abwechselnd befindet eine der Formhälften unter der Düse und die andere in ihrer Schließeinheit. Eine derartige Anlage liefert zwar überquetschungsfreie, also nahtlose, langgestreckte Formteile auch komplizierter Geometrie, ist aber zur Herstellung von Kunststoffhohlkörpern mit im Verhältnis zur Länge großem Durchmesser im Vergleich zu Anlagen mit vertikaler Formtrennebene unwirtschaftlicher.

Der Erfindung liegt die Aufgabe zugrunde, den Einsatzbereich einer Hohlkörperblasanlage mit vertikaler Formtrennebene zu erweitern.

Diese Aufgabe ist bei einer Hohlkörperblasanlage der einleitend angegebenen Gattung erfindungsgemäß dadurch gelöst, dass im oberen Bereich der ersten vertikalen Schließplatte eine obere horizontale Schließplatte freitragend befestigbar ist, die unterseitig eine obere Formhälfte trägt, und dass im unteren Bereich der zweiten vertikalen Schließplatte eine horizontale Trägerplatte freitragend befestigbar ist, gegen welche sich mindestens ein Hydraulikzylinder abstützt, mittels dessen eine untere horizontale Schließplatte, auf der oberseitig eine untere Formhälfte sitzt, vertikal verfahrbar ist, und dass beim Zusammenfahren der vertikalen Schließplatten die obere horizontale Schließplatte und die untere horizontale Trägerplatte mit ihren Rändern mit der jeweils gegenüberliegenden vertikalen Schließplatte in einen formschlüssigen Eingriff kommen.

Der Kern der Erfindung besteht somit darin, eine Hohlkörperblasanlage mit vertikaler Formtrennebene so umzurüsten, dass sie auch zur Herstellung langgestreckter Hohlkörper, die eine horizontale Formtrennebene erfordern, als eine sog. Horizontalanlage verwendbar ist. Die Hohlkörperblasanlage kann also je nach Art der herzustellenden Hohlkörper von Formen mit vertikaler Formtrennebene auf Formen mit horizontaler Formtrennebene umgebaut werden und erspart deshalb die Anschaffung einer ausschließlich für Formen mit horizontaler Formtrennebene konstruierten, zweiten Blasanlage.

Der formschlüssige Eingriff zwischen der oberen horizontalen Schließplatte und der zweiten vertikalen Schließplatte und zwischen der unteren horizontalen Trägerplatte und der ersten vertikalen Schließplatte läßt sich sehr einfach durch eine Versäulung der betreffenden Platten mittels Führungsbolzen und komplementären Führungsbüchsen verwirklichen (Anspruch 2).

Die untere horizontale Schließplatte wird am besten über Führungssäulen geführt, in welchem Fall ein einziger zentrisch unter der unteren horizontalen Schließplatte angeordneter Hydraulikzylinder ausreicht (Anspruch 3).

Die Anlage kann einen Schlaucheinlegeroboter umfassen (Anspruch 4), der den extrudierten Schlauch, den sogenannten Vorformling von der Düse übernimmt und in die Kavität der unteren Blasformhälfte einlegt. Der Roboter kann mit nur einem Greifer ausgestattet sein, der dann das obere Ende des Schlauches erfasst. Stattdessen kann der Roboter auch zwei Greifer umfassen, den einen für das obere, den anderen für das untere Schlauchende.

Nach einer Weiterbildung kann der Schlaucheinlegeroboter eine das obere Schlauchende beim Abnehmen von der Düse verschließende Quetschzange umfassen (Anspruch 5), die verhindert, dass die Luft, die z.B. bereits während des Extrudierens des Schlauches als Stützluft eingeblasen werden kann, aus dem Schlauch entweicht und dieser während oder nach dem Einlegen in die untere Blasformhälfte zusammenfällt.

Bei Verwendung eines Schlauchroboters mit nur einem, als Quetschzange ausgebildeten Greifer kann das untere Schlauchende entweder durch eine weitere Quetschzange verschlossen werden oder die untere Formhälfte kann mindestens eine das untere Schlauchende verschließende Klemmvorrichtung umfassen (Anspruch 6).

Um den Schlauch in der geschlossenen Blasform zu dem fertigen Hohlkörper auszuformen kann an einer der Formhälften, zweckmäßig der unteren Formhälfte, eine Blasvorrichtung angeordnet sein (Anspruch 7).

Diese Blasvorrichtung kann insbesondere aus einer in den Schlauch einstechbaren, an eine Blasluftquelle angeschlossenen Hohlnadel bestehen (Anspruch 8).

Stattdessen kann die Blasvorrichtung aus einer eines der Enden des Schlauches zu einer Mündung des fertigen Hohlkörpers ausformenden und kalibrierenden Blaspinole bestehen (Anspruch 9). Diese Blaspinole kann ebenfalls fest an einer der Formhälften, zweckmäßig der unteren Formhälfte, montiert sein.

Bei einer Weiterbildung dieser Ausführungsform ist die Blaspinole in Richtung des Aushebens des fertigen Hohlkörpers bei geöffneter Blasform beweglich (Anspruch 10). Zusätzlich oder alternativ können zum Ausheben des fertigen Hohlkörpers die an sich bekannten Hilfsvorrichtungen wie Vakuumsauger oder Greifer verwendet werden.

Eine bevorzugte Ausführungsform zeichnet sich durch eine weitere verfahrbare Schließeinheit aus, die den gleichen Aufbau wie die erste Schließeinheit hat und wechselweise mit letzterer unter der Schlauchextrusionsdüse positionierbar ist (Anspruch 11). Wie bei den bekannten Doppelblasanlagen bewegen sich die beiden Schließeinheiten im Tandem hin- und hergehend von einer Position unter der Düse, in der der Schlauch in der unteren Formhälfte eingelegt wird, in eine Position auf der einen bzw. anderen Seite der Düse, in der der Schlauch zu dem fertigen Hohlkörper ausgeblasen und die Abkühlzeit bis zum Öffnen der Formhälften und Ausheben des fertigen Hohlkörpers abgewartet wird.

Vorzugsweise ist die Schlauchextrusionseinrichtung heb- und senkbar (Anspruch 12). Bei Verwendung der Anlage in Verbindung mit Formen mit vertikaler Formtrennebene, also beispielsweise zur Herstellung von im Verhältnis zu ihrem Durchmesser kurzen Rohrstücken oder Behältern, befindet sich die Düse in ihrer untersten Stellung. Bei Verwendung der Anlage mit Formen mit horizontaler Formtrennebene richtet sich die Höhe der Düsenmündung nach der Länge des zur extrudierenden Schlauches oder Vorformlings, also im Wesentlichen der Länge des zur erzeugenden, langgestreckten Hohlkörpers.

Unabhängig davon ist die Schlauchextrusionseinrichtung zweckmäßig horizontal und parallel zur Bewegungsrichtung der Schließplatten verfahrbar.

In der Zeichnung ist ein schematisch vereinfachtes Ausführungsbeispiel einer Hohlkörperblasanlage nach der Erfindung dargestellt. Es zeigt:
- Fig. 1:: eine Seitenansicht einer Blasanlage nach dem Stand der Technik, d.h. mit vertikaler Formtrennebene;
- Fig. 2:: eine perspektivische Ansicht der Anlage gem. Fig. 1;
- Fig. 3:: eine Seitenansicht der Blasanlage nach der Erfindung, d.h. mit horizontaler Formtrennebene;
- Fig. 4:: eine perspektivische Ansicht der Anlage gem. Fig. 3, jedoch mit der unteren Blasformhälfte in Einlegestellung;
- Fig. 5a-d:: den Ablauf eines Arbeitszyklus der Anlage gem. der Fig. 3 und 4;
- Fig. 6:: eine Aufsicht auf die untere Formhälfte;
- Fig. 6a:: den linken Teil der unteren Formhälfte gem. Fig. 6, jedoch mit eingelegtem Schlauch;
- Fig. 7:: die untere Formhälfte in der Seitenansicht;
- Fig. 8:: eine Seitenansicht einer anderen Ausführungsform der unteren Formhälfte;
- Fig. 9:: die Ausführungsform gemäß Fig. 8 in der Aufsicht;
- Fig. 10:: eine Seitenansicht einer Abwandlung der Ausführungsform gemäß den Fig. 8 und 9;
- Fig. 11:: die Abwandlung in der Aufsicht;
- Fig. 12:: eine Stirnansicht einer Blasanlage mit einer Schließeinheit;
- Fig. 13:: eine Stirnansicht einer Blasanlage mit zwei Schließeinheiten.

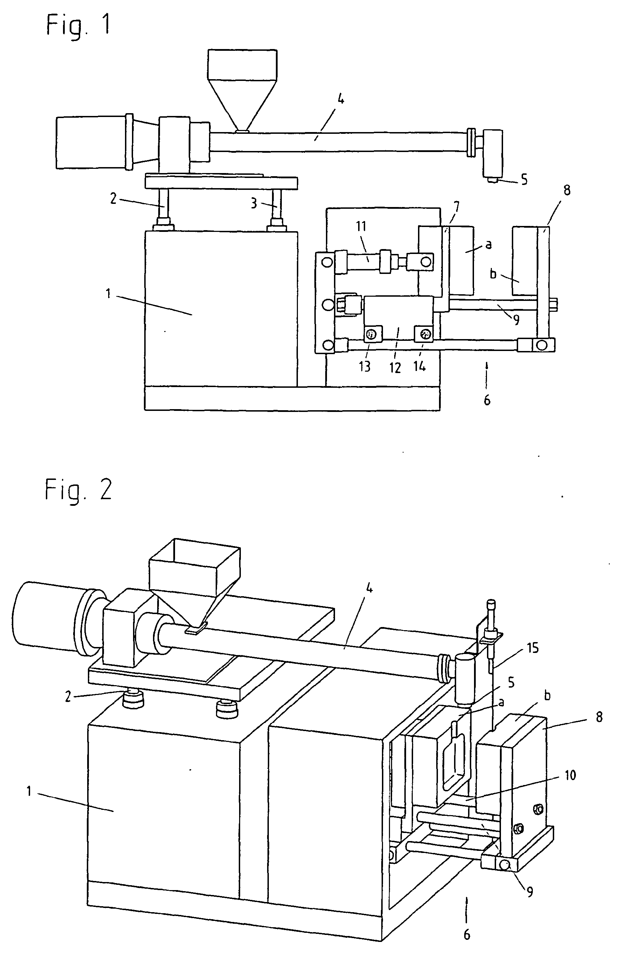

Eine übliche Hohlkörperblasanlage mit vertikaler Formtrennebene umfasst gemäß den Fig. 1 und 2 ein Maschinengestell 1, auf dem eine hydraulisch oder über Spindeln 2, 3 heb- und senkbare Schlauchextrusionseinrichtung 4 mit einer Düse 5 sitzt. Unter der Düse befindet sich eine Schließeinheit 6. Diese umfasst eine erste oder innere Schließplatte 7 und eine zweite oder äußere Schließplatte 8. Die Schließplatten 7, 8 sind gegensinnig aufeinander zu und voneinander weg auf horizontalen Holmen 9, 10 mittels eines Hydraulikzylinders 11 verfahrbar. Die Holme 9, 10 und der Zylinder 11 sind auf einem Schlitten 12 montiert, der seinerseits mittels einer nicht dargestellten Zylinders auf zwei Holmen 13, 14 rechtwinklig zur Bewegung der Schließplatten 7, 8 aus einer Position unter der Düse 5 in eine Position unter einer üblichen Blaspinole 15 verfahrbar ist. Mit der ersten Schließplatte 7 ist eine erste Blasformhälfte a und mit der zweiten Schließplatte 8 eine zweite Blasformhälfte b verschraubt. Nach dem Extrudieren eines Schlauches oder Vorformlings passender Länge aus der Düse 5 zwischen die geöffneten Formhälften a, b wird die Form mittels des Hydraulikzylinders 11 geschlossen. Die Schließeinheit 6 wird dann mittels des Schlittens 12 von ihrer Position unter der Düse 5 quer unter die Blaspinole 15 verfahren. Nach dem Ausblasen des Hohlkörpers und einer Abkühlzeit öffnet der Hydraulikzylinder 11 die Form und der Hohlkörper, z.B. eine Griffflasche entsprechend der in Fig. 2 in der Formhälfte a erkennbaren Kavität, wird ausgeworfen. In den Fig. 1 und 2 sind die bekannten Hilfseinrichtungen z.B. zur Veränderung der Wandstärke des Schlauches und zum Abtrennen des Schlauches unterhalb der Düse sowie die Hydraulik- und Kühlwasseranschlüsse nicht dargestellt.

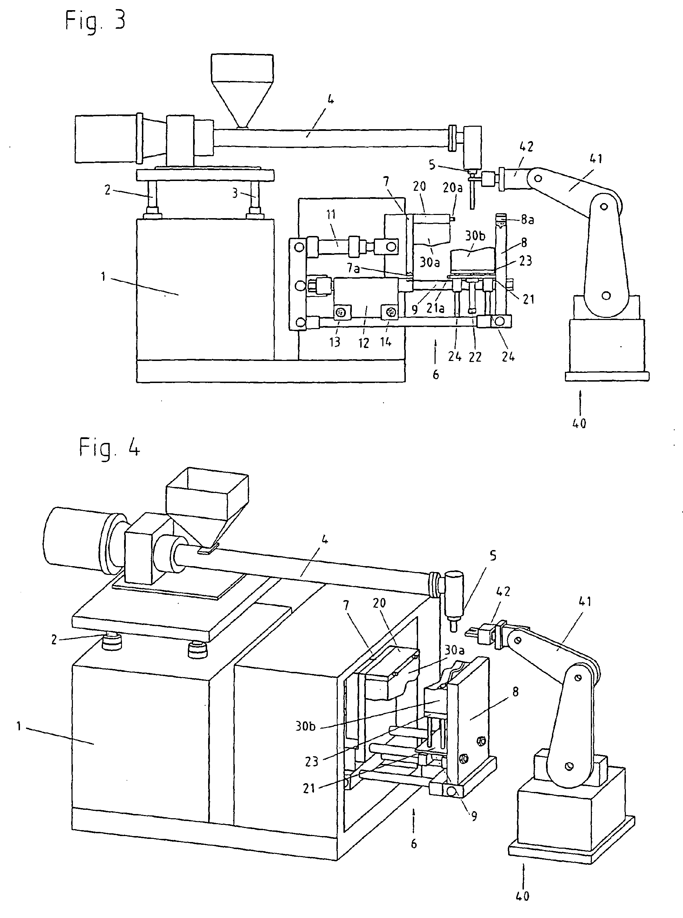

Diese Blasanlage kann gemäß der Figuren 3 bis 7 auch zur Herstellung von Hohlkörpern in einer liegenden Blasform, d.h. mit waagrechter Formtrennebene, verwendet werden. Nach dem Ausbau der Blasformhälften a, b (in Fig. 1 und 2) wird im oberen Bereich der ersten, inneren Schließplatte 7 eine obere, horizontale Schließplatte 20 freitragend befestigt, z.B. mittels Schrauben und Passstiften. Im unteren Bereich der zweiten, äußeren Schließplatte 8 wird in gleicher Weise eine horizontale Trägerplatte 21 freitragend befestigt. Die obere horizontale Schließplatte 20 hat an ihrem äußeren, der vertikalen Schließplatte 8 zugewandten Rand Führungsstifte 20a und die vertikale äußere Schließplatte 8 ist mit korrespondieren Führungsbuchsen 8a ausgestattet. In entsprechender Weise hat die horizontale Trägerplatte 21 Führungsstifte 21a und die vertikale innere Schließplatte 7 Führungsbüchsen 7a. Unter der Trägerplatte 21 ist mittig ein Hydraulikzylinder 22 befestigt. Dessen Kolbenstange 22a durchgreift die Trägerplatte 21 und endet unter einer unteren, horizontalen Schließplatte 23, die über Führungssäulen 24 und den Hydraulikzylinder 22 heb- und senkbar auf der Trägerplatte 21 sitzt.

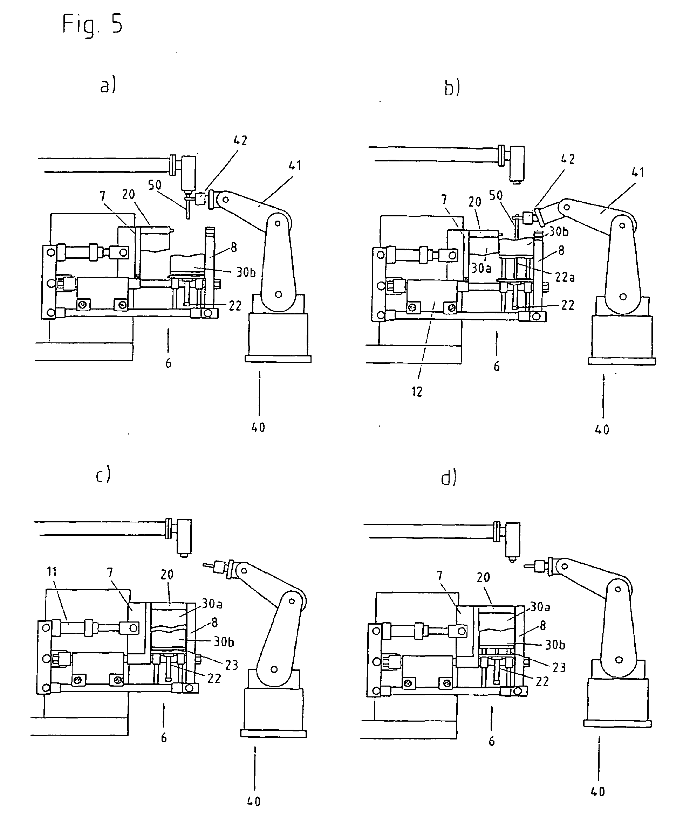

Gegen die Unterseite der oberen horizontalen Schließplatte 20 ist eine obere Formhälfte 30a verschraubt. Gegen die Oberseite der unteren horizontalen Schließplatte 23 ist eine korrespondierende untere Formhälfte 30b verschraubt. In Bewegungsrichtung der vertikalen Schließplatten 7, 8 ist die Breite der Teile 20, 21 und 23 so bemessen, dass die untere Formhälfte 30b zumindest bei maximaler Offenstellung der vertikalen Schließplatten 7, 8 mittels des Hydraulikzylinders 22 in die in Fig. 4 gezeichnete Stellung gebracht werden kann, in der sie sich neben der oberen Formhälfte 30a befindet. Nötigenfalls können die Führungsstifte 20a, 21a ein- und ausfahrbar in ihren Platten aufgenommen sein.

Gemäß Figur 5a übernimmt ein Schlauchroboter 40 den Schlauch 50 von der Düse 5 mittels eines als Quetschzange 42 ausgebildeten Greifers am Ende eines Arms 41. Währenddessen hebt der Hydraulikzylinder 22 die untere Blasformhälfte 30b in die in Figur 5b gezeichnete Einlegestellung, d.h. vorzugsweise etwa höhengleich zu der oberen Formhälfte 30a damit die äußere vertikale Schließplatte die Einlegebewegung Roboterarms 41 nicht behindert.

Nach dem Einlegen des Schlauches 50 in die Kavität der unteren Formhälfte 30b, ggf. unterstützt durch ein gesteuertes Verfahren der Schließeinheit 6 mittels des Schlittens 12, senkt der Hydraulikzylinder 22 diese Formhälfte wieder ab. Anschließend fährt der Hydraulikzylinder 11 die vertikalen Schließplatten 7, 8 in die in Fig. 5c gezeigte Stellung zusammen, in der die obere, horizontale Schließplatte 20 und die untere, horizontale Trägerplatte 21 mit den jeweiligen vertikalen Schließplatten 7, 8 kraftschlüssig verbunden sind. Anschließend hebt der Hydraulikzylinder 22 die untere Formhälfte 30b bis zur Anlage an die obere Formhälfte 30a, siehe Fig. 5d. In der nun geschlossenen Form wird der Schlauch zu dem fertigen Hohlkörper geblasen. Nach einer Abkühlzeit und der Entnahme des Hohlkörpers aus der wieder geöffneten Form beginnt der nächste Zyklus.

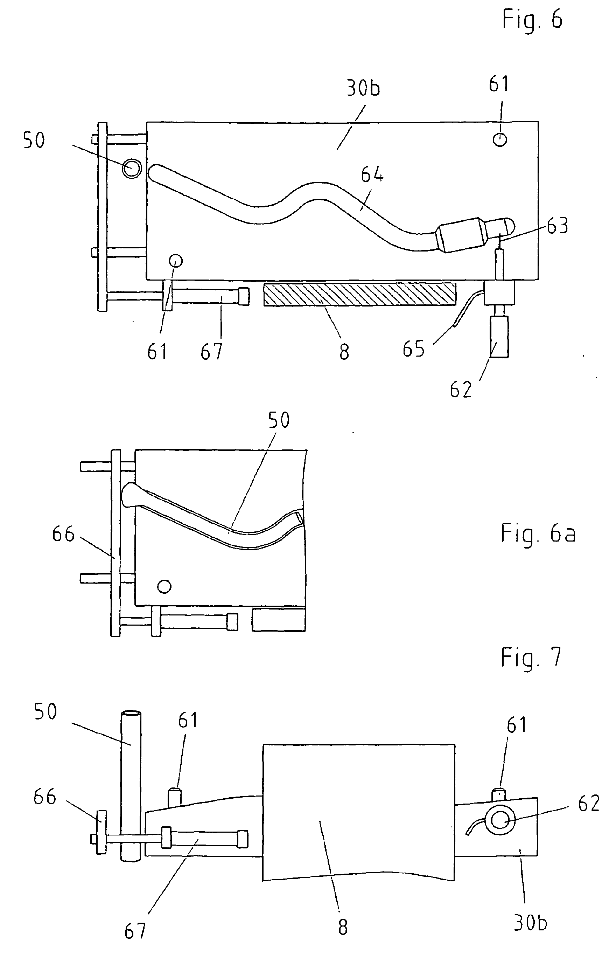

Die Figuren 6, 6a und 7 veranschaulichen weitere Merkmale der unteren Formhälfte 30b. Gemäß Fig. 6 hat diese Formhälfte zwei Passzapfen 61, denen Bohrungen oder Buchsen in der oberen Formhälfte 30a (nicht dargestellt) entsprechen. An ihrem einen Ende hat die Formhälfte 30b eine Schlauchklemme 66, die über einen Arbeitszylinder 67 betätigbar ist. Fig. 6 zeigt die Offenstellung mit dem angedeuteten Schlauch 50, Fig. 6a die Stellung, in der die Schlauchklemme das bezogen auf Fig. 3 untere, zunächst freihängende Ende des Schlauches 50 fixiert und verschließt. An das andere Ende der Formhälfte 30b ist ein Arbeitszylinder 62 angebaut, mittels dessen eine Hohlnadel 63 in die Kavität 64 vorschiebbar ist. Bei geschlossener Form wird der eingelegte und von der Hohlnadel 63 durchstochene Schlauch mittels über eine Leitung 65 zugeführter Druckluft zu dem fertigen Hohlkörper ausgeblasen.

Figur 7 zeigt die untere Formhälfte 30b mit den zuvor erwähnten Anbauteilen in einer vereinfachten Seitenansicht.

Die anhand der Figuren 6, 6a und 7 erläuterten Anbauteile an die untere Formhälfte 30b sind beispielhaft zu verstehen. Sie können durch funktionsgleiche, andere, im Stand der Technik bekannte Vorrichtungen ersetzt werden.

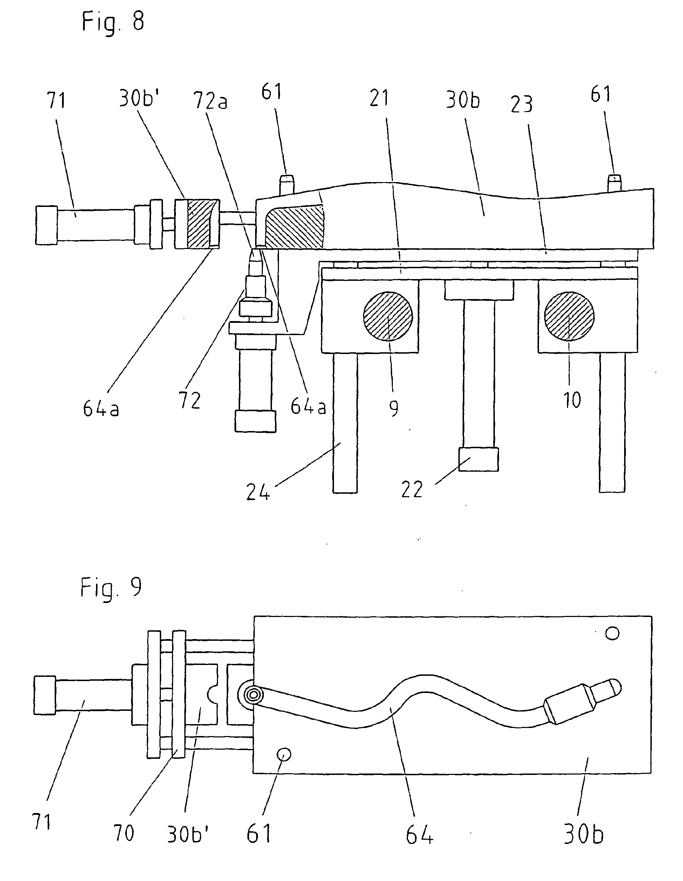

Die Figuren 8 und 9 zeigen eine andere Ausführungsform der unteren Formhälfte 30b. Im Unterschied zu den Figuren 6, 6a und 7 ist die äußere vertikale Schließplatte 8 weggelassen, jedoch zeigt Figur 8 die untere Blasformhälfte 30b auf ihrer Schließplatte 23, die mittels des Hubzylinders 22 heb- und senkbar sowie über die Führungssäulen 24 geführt ist. Die Anordnung sitzt auf den Holmen 9 und 10, die die äußere vertikale Schließplatte tragen. Bei prinzipiell gleicher Form wie in Figur 6 ist das linksseitige Ende der Kavität 64 aus der Formhälfte nach unten herausgeführt. An diesem Ende ist die Formhälfte 30b in einer durch die Kavität verlaufenden Vertikalebene geteilt. Der linksseitige Endabschnitt 30b' ist an einem Joch 70 montiert, das mittels eines Hydraulikzylinders 71 auf Führungsstangen zwischen der dargestellten Offenstellung und der Schließstellung verfahrbar ist. Unter der nach unten weisenden, konischen Öffnung 64a der Kavität 64 ist eine übliche Blaspinole 72 angeordnet. Bei geschlossener Form fährt die Düse 72a der Blaspinole 72 in die Öffnung 64a oder Mündung der Kavität 64 bis zur abdichtenden Anlage an den Schlauch, um diesen dann in üblicher Weise zu dem fertigen Hohlkörper auszublasen.

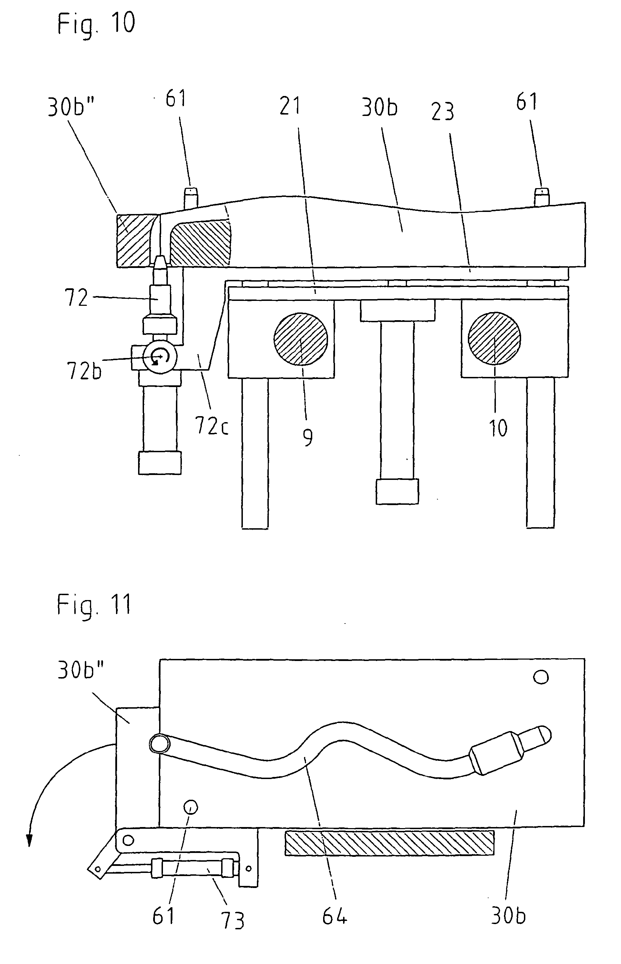

Die Figuren 10 und 11 veranschaulichen ein Abwandlung, bei der das linksseitige Ende 30b" entsprechend dem Pfeil in Figur 11 mittels eines Hydraulikzylinders 73 abschwenkbar ist. Unter der Formhälfte ist wie im Fall der Figur 8 eine Blaspinole 72 angeordnet. Diese ist jedoch an ihrem Tragarm 72a entsprechend dem Pfeil in Figur 10 um eine Achse 72b drehbar. Nach dem Ausblasen des Hohlkörpers, der Abkühlzeit und dem Öffnen der Blasform sowie dem Abschwenken des Teils 30b" entsprechend dem Pfeil in Figur 11 wird die Blaspinole bei weiterhin in die Mündung der Kavität eingefahrener Düse 72c um die Achse 72b gedreht und nimmt dabei den erstarrten Hohlkörper mit, der auf diese Weise aus der Form ausgeworfen wird ohne dass dazu gesonderte Vorrichtungen wie z.B. die an sich bekannten Vakuumsauger benötigt werden.

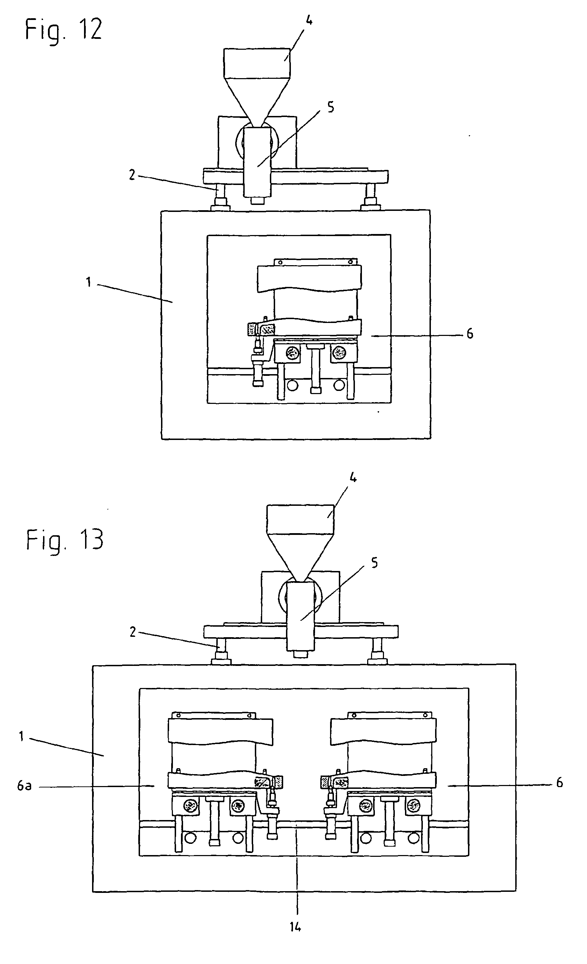

Figur 12 zeigt eine Stirnansicht einer mit einer Blasform entsprechend den Figuren 8 und 9 ausgerüsteten Blasanlage.

Figur 13 zeigt die gleiche Maschine, jedoch ausgerüstet mit einer zweiten Schließeinheit 6a. Die beiden Schließeinheiten können identische oder unterschiedliche Blasformen haben. Die jeweiligen unteren Blasformhälften sind mittels des gleichen Schlaucheinlegeroboters (hier nicht dargestellt) beschickbar uzw. in der Weise, dass jeweils eine Blasform beschickt wird, während in der anderen Blasform der zuvor eingelegte Schlauch ausgeblasen wird oder sich der ausgeblasene Hohlkörper bereits in der Abkühlphase befindet. Statt mittels der wie in den Figuren 8 und 9 direkt an die jeweilige untere Blasformhälfte angebauten Blaspinolen können die eingelegten Schläuche auch mit am Maschinenrahmen fest montierten Blaspinolen wie etwa 15 in Figur 2 ausgeblasen werden. Diese sind dann analog Fig. 2 beidseits der Schlauchextrusionseinrichtung 4 montiert. Die Schließeinheiten 6, 6a können, wie angedeutet, auf den gleichen horizontalen Holmen 13, 14 (vgl. Fig. 1) getrennt oder im Tandem verfahrbar sein, um sie nötigenfalls in die richtige Position unter die jeweilige Blaspinole zu bringen.

## Patentansprüche

1. Hohlkörperblasanlage bestehend aus einem Maschinengestell (1), mit einer Schlauchextrusionseinrichtung (4), unterhalb deren Düse (5) sich mindestens eine Schließeinheit (6) mit einer ersten und einer zweiten vertikalen Schließplatte (7, 8) befindet, die gegensinnig aufeinander zu und voneinander weg verfahrbar auf horizontalen Holmen (9, 10) geführt sind, die ihrerseits an einem Schlitten (12) montiert sind, mittels dessen die Schließeinheit (6) aus ihrer Position unter der Schlauchextrusionsdüse in eine andere Position verfahrbar ist, **dadurch gekennzeichnet, dass** im oberen Bereich der ersten vertikalen Schließplatte (7) eine obere horizontale Schließplatte (20) freitragend befestigbar ist, die unterseitig eine obere Formhälfte (30a) trägt, und dass im unteren Bereich der zweiten vertikalen Schließplatte (8) eine horizontale Trägerplatte (21) freitragend befestigbar ist, gegen welche sich mindestens ein Hydraulikzylinder (22) abstützt, mittels dessen eine untere horizontale Schließplatte (23), auf der oberseitig eine untere Formhälfte (30b) sitzt, vertikal verfahrbar ist, und dass beim Zusammenfahren der vertikalen Schließplatten (7, 8) die obere horizontale Schließplatte (20) und die untere horizontale Trägerplatte (21) mit ihren Rändern mit der jeweils gegenüberliegenden vertikalen Schließplatte (7, 8) in einen formschlüssigen Eingriff kommen.

2. Hohlkörperblasanlage nach Anspruch 1, **dadurch gekennzeichnet, dass** der formschlüssige Eingriff zwischen der oberen horizontalen Schließplatte (20) und der zweiten vertikalen Schließplatte (8) und zwischen der unteren horizontalen Trägerplatte (21) und der ersten vertikalen Schließplatte (7) durch Führungsbolzen (20a, 21a) und komplementäre Führungsbüchsen (8a, 7a) verwirklicht ist.

3. Hohlkörperblasanlage nach Anspruch 1 oder 2, **dadurch gekennzeichnet, dass** die untere horizontale Schließplatte (23) über Führungssäulen (24) geführt ist und dass der Hydraulikzylinder (22) zentrisch unter der unteren horizontalen Schließplatte (23) angeordnet ist.

4. Hohlkörperblasanlage nach einem der Ansprüche 1 bis 3, **dadurch gekennzeichnet, dass** die Anlage einen Schlaucheinlegeroboter (40) umfasst.

5. Hohlkörperblasanlage nach Anspruch 4, **dadurch gekennzeichnet, dass** der Schlaucheinlegeroboter (40) eine das obere Schlauchende beim Abnehmen von der Düse (5) verschliessende Quetschzange (42) umfasst.

6. Hohlkörperblasanlage nach einem der Ansprüche 1 bis 5, **dadurch gekennzeichnet, dass** die untere Formhälfte (30b) mindestens eine eines der Schlauchenden verschliessende Klemmvorrichtung (66) umfasst.

7. Hohlkörperblasanlage nach einem der Ansprüche 1 bis 6, **dadurch gekennzeichnet, dass** an einer der Formhälften (30b) eine Blasvorrichtung (62, 63; 72) angeordnet ist.

8. Hohlkörperblasanlage nach Anspruch 7, **dadurch gekennzeichnet, dass** die Blasvorrichtung aus einer in den Schlauch einstechbaren, an eine Blasluftquelle (65) angeschlossenen Hohlnadel (63) besteht.

9. Hohlkörperblasanlage nach Anspruch 7, **dadurch gekennzeichnet, dass** die Blasvorrichtung aus einer eines der Enden des Schlauches zu einer Mündung des fertigen Hohlkörper ausformenden und kalibrierenden Blaspinole (72) besteht.

10. Hohlkörperblasanlage nach Anspruch 9, **dadurch gekennzeichnet, dass** die Blaspinole (72) zum Ausheben des fertigen Hohlkörpers bei geöffneter Blasform beweglich ist.

11. Hohlkörperblasanlage nach einem der Ansprüche 1 bis 10, **gekennzeichnet durch** eine weitere verfahrbare Schließeinheit (6a), die den gleichen Aufbau wie die erste Schließeinheit (6) hat und wechselweise mit letzerer unter der Schlauchextrusionsdüse (5) positionierbar ist.

12. Hohlkörperblasanlage nach einem der Ansprüche 1 bis 11, **dadurch gekennzeichnet, dass** die Schlauchextrusionseinrichtung (4) heb- und senkbar (2, 3) ist.

## Claims

1. A hollow-body blowing system consisting of a machine frame (1), comprising a tube extrusion device (4) beneath whose die (5) there is located at least one closing unit (6) with a first and a second vertical closing plate (7, 8) which can be moved in opposite directions towards one another and away from each other on horizontal bars (9, 10), which on their part are mounted on a carriage (12) by means of which the closing unit (6) can be moved from its position beneath the tube extrusion die to another position, **characterized in that** in the upper region of the first vertical closing plate (7) an upper horizontal closing plate (20) can be fastened in a cantilevered manner which on its lower side comprises an upper mold half (30a), and that in the lower region of the second vertical closing plate (8) a horizontal carrier plate (21) can be fastened in a cantilevered manner, against which rests at least one hydraulic cylinder (22) by means of which a lower horizontal closing plate (23) on which is situated on the upper side a lower mold half (30b) can be displaced vertically, and that upon moving the vertical closing plates (7, 8) together the upper horizontal closing plate (20) and the lower horizontal support plate (21) come into interlocking engagement with their edges with the respective opposite vertical closing plate (7, 8)

2. A hollow-body blowing system according to claim 1, **characterized in that** the interlocking engagement between the upper horizontal closing plate (20) and the second vertical closing plate (8) and between the lower horizontal support plate (21) and the first vertical closing plate (7) is realized by guide bolts (20a, 21a) and complementary guide bushes (8a, 7a).

3. A hollow-body blowing system according to claim 1 or 2, **characterized in that** the lower horizontal closing plate (23) is guided via guide columns (24) and that the hydraulic cylinder (22) is arranged in a centric fashion beneath the lower horizontal closing plate (23).

4. A hollow body blowing system according to one of the claims 1 to 3, **characterized in that** the system comprises a tube insertion robot (40).

5. A hollow body blowing system according to claim 4, **characterized in that** the tube insertion robot (40) comprises a crimper (42) sealing the upper tube end during removal from the die (5).

6. A hollow-body blowing system according to one of the claims 1 to 5, **characterized in that** the lower mold half (30b) comprises at least one clamping apparatus (66) sealing one of the tube ends.

7. A hollow-body blowing system according to one of the claims 1 to 6, **characterized in that** a blowing apparatus (62, 63; 72) is arranged on one of the mold halves (30b).

8. A hollow-body blowing system according to claim 7, **characterized in that** the blowing apparatus consists of a hollow needle (63) which can pierce the tube and is connected to a blowing air source (65).

9. A hollow-body blowing system according to claim 7, **characterized in that** the blowing apparatus consists of a blowing sleeve (72) forming and calibrating one of the ends of the tube into an orifice of the finished hollow body.

10. A hollow-body blowing system according to claim 9, **characterized in that** the blowing sleeve (72) is movable for lifting out the finished hollow body when the blowing mold is opened.

11. A hollow-body blowing system according to one of the claims 1 to 10, **characterized by** a further movable closing unit (6a) having the same configuration as the first closing unit (6) and can be positioned in an alternating manner with the latter beneath the tube extrusion die (5).

12. A hollow-body blowing system according to one of the claims 1 to 11, **characterized in that** the tube extrusion device (4) can be lifted and lowered (2, 3).

## Revendications

1. Installation de soufflage d'éléments creux composée d'un bâti de machine (1), avec un dispositif d'extrusion de tubes (4), en dessous de la buse (5) duquel il est prévu au moins une unité de fermeture (6) avec une première plaque de fermeture verticale et une deuxième (7, 8) qui sont mobiles dans des directions opposées en se rapprochant ou s'écartant l'une vers l'autre sur des longerons horizontaux (9, 10) montés sur un chariot (12) au moyen duquel l'unité de fermeture (6) peut être déplacée depuis sa position sous la buse d'extrusion de tube, **caractérisée en ce qu'**il est prévu dans la partie supérieure de la première plaque de fermeture verticale (7) une plaque de fermeture horizontale supérieure (20) pouvant être fixée en porte-à-faux, qui porte sur sa face inférieure un demi-moule supérieur (30a), et **en ce qu'**il est prévu dans la partie inférieure de la deuxième plaque de fermeture verticale (8) une plaque de support horizontale (21) pouvant être fixée en porte-à-faux, contre laquelle s'appuie au moins un vérin hydraulique (22) au moyen duquel une plaque de fermeture horizontale inférieure (23), sur laquelle repose un demi-moule inférieur (30b), peut être déplacée verticalement, et **en ce que** lors de la réunion des plaques de fermeture verticales (7, 8), la plaque de fermeture horizontale supérieure (20) et la plaque de support horizontale inférieure (21) viennent en engagement positif sur leurs bords avec la plaque de fermeture verticale (7, 8) qui leur fait face.

2. Installation de soufflage d'éléments creux selon la revendication 1, **caractérisée en ce que** la prise par engagement positif entre la plaque de fermeture horizontale supérieure (20) et la deuxième plaque de fermeture verticale (8) et entre la plaque de support horizontale inférieure (21) et la première plaque de fermeture verticale (7) est réalisée par des goujons de guidage (20a, 21a) et des douilles de guidage (8a, 7a) complémentaires.

3. Installation de soufflage d'éléments creux selon la revendication 1 ou 2, **caractérisée en ce que** la plaque de fermeture horizontale inférieure (23) est guidée sur des colonnes de guidage (24) et **en ce que** le vérin hydraulique (22) est disposé en position centrée sous la plaque de fermeture horizontale inférieure (23).

4. Installation de soufflage d'éléments creux selon l'une quelconque des revendications 1 à 3, **caractérisée en ce que** l'installation comprend un robot de pose de tubes (40).

5. Installation de soufflage d'éléments creux selon la revendication 4, **caractérisée en ce que** le robot de pose de tubes (40) comprend une pince d'écrasement (42) qui ferme l'extrémité supérieure du tube en le retirant de la buse (5).

6. Installation de soufflage d'éléments creux selon l'une quelconque des revendications 1 à 5, **caractérisée en ce que** le demi-moule inférieur (30b) comprend au moins un dispositif de serrage (66) qui ferme au moins une des extrémités du tube.

7. Installation de soufflage d'éléments creux selon l'une quelconque des revendications 1 à 6, **caractérisée en ce qu'**un dispositif de soufflage (62, 63; 72) est disposé sur l'un des demi-moules (30b).

8. Installation de soufflage d'éléments creux selon la revendication 7, **caractérisée en ce que** le dispositif de soufflage se compose d'une aiguille creuse (63) raccordée à une source d'air de soufflage (65) et pouvant être enfoncée dans le tuyau.

9. Installation de soufflage d'éléments creux selon la revendication 7, **caractérisée en ce que** le dispositif de soufflage se compose d'une buse de soufflage (72) déformant les extrémités du tube pour obtenir l'embouchure de l'élément creux fini et assurant le calibrage.

10. Installation de soufflage d'éléments creux selon la revendication 9, **caractérisée en ce que** le trou de soufflage (72) est mobile pour soulever l'élément creux fini lorsque le moule de soufflage est ouvert.

11. Installation de soufflage d'éléments creux selon l'une quelconque des revendications 1 à 10, **caractérisée en ce qu'**elle comprend une autre unité de fermeture mobile (6a) qui a la même structure que la première unité de fermeture (6) et qui peut être positionnée sous la buse d'extrusion de tubes (5) en alternance avec celle-ci.

12. Installation de soufflage d'éléments creux selon l'une quelconque des revendications 1 à 11, **caractérisée en ce que** le dispositif d'extrusion de tubes (4) peut être levé et abaissé (2, 3).
